# FASCICULE DE BREVET EUROPEEN

(11) **EP 0 401 083 B1**
(45) Date de publication et mention de la délivrance du brevet: **10.11.1993**
(21) Numéro de dépôt: 90401355.4
(22) Date de dépôt: 22.05.1990
(51) Int. Cl.: F16L 33/22

(54) **Dispositif pour le raccordement étanche d'un tube et d'un tuyau souple**
Vorrichtung zum dichten Verbinden eines Rohres mit einem Schlauch
Sealed connection device for a tube and a hose

(30) Priorité: 29.05.1989 FR 8907021
(43) Date de publication de la demande: 05.12.1990
(73) Titulaire: AUTOBREVETS, 31500 Toulouse (FR)
(72) Inventeur: Marchou, Jacques, Ganac, F-09000 Foix (FR)
(74) Mandataire: Descourtieux, Philippe

(56) Documents cités:
- CH-A- 338 063
- FR-A- 909 769
- FR-A- 1 249 979
- FR-A- 2 628 819
- GB-A- 1 034 622
- GB-A- 1 065 325
- GB-A- 2 161 568
- US-A- 2 853 320

## Description

On sait qu'il est fréquemment nécessaire, notamment dans l'industrie, de procéder, lors du montage de machines ou de moteurs, au raccordement étanche d'un tube et d'un tuyau souple. En particulier, dans le cas de la construction automobile, ce type de raccordement doit être prévu sur les canalisations d'eau de refroidissement ainsi que sur les canalisations d'alimentation en combustible liquide.

Dans un grand nombre d'applications, le raccordement s'effectue entre un tube rigide, généralement métallique ou en matière plastique, et un tuyau en caoutchouc ou autre matière souple et élastiquement déformable; tous deux présentent une section transversale sensiblement circulaire. A cet effet, le tuyau souple est emmanché à force sur une extrémité d'un tube rigide, quelquefois constitué par un simple embout, venu de moulage lors de la fabrication d'un carter de moteur, ou formant une seule pièce avec un appareil, tel par exemple qu'un radiateur de refroidissement. Après emmanchement du tuyau souple sur le tube rigide, l'étanchéité du raccordement et l'assujettissement du tuyau sur le tube sont assurés simultanément par un collier de serrage. Ce dernier empêche donc tout à la fois, d'une part le glissement ou le déboîtement du tuyau souple sur le tube, qui pourrait être provoqué aussi bien par la pression du fluide véhiculé que par des vibrations, d'autre part les fuites qui pourraient se produire dans la zone du raccordement. La demande de brevet GB-A-2.161.568 décrit un montage du genre qui vient d'être exposé, bien qu'il soit prévu un anneau de serrage à lamelles longitudinales, entre le tuyau souple et le collier de serrage. Une construction analogue est proposée par la demande européenne publiée 0 219 418.

Cependant, cette technique de raccordement étanche d'un tube et d'un tuyau souple, outre qu'elle exige généralement un serrage important des colliers pour empêcher le déboîtement et qu'elle risque, de ce fait, d'entraîner le fluage du tuyau souple, ne se prête pas facilement à l'automatisation de certaines opérations de montage. On sait en effet que la mise en place et le serrage d'un collier sur un tuyau souple ne paraissent pas actuellement réalisables sans intervention manuelle, éventuellement assistée par des moyens motorisés. En outre, le démontage du raccordement n'est pas très facile, car il exige en général la destruction du collier de serrage.

D'autre part, on a déjà eu l'idée de réaliser des dispositifs facilement démontables pour le raccordement rapide de deux éléments de canalisation dont l'un au moins est un tuyau souple. Dans de tels dispositifs, tels que ceux décrits par le brevet FR-A-1.458.005 et par le brevet GB-A-2.178.503, l'extrémité de l'un au moins des éléments de canalisation est montée de façon étanche sur un embout rigide. Ce dernier comporte lui-même des moyens permettant de réaliser son raccordement étanche avec un embout rigide complémentaire disposé à l'extrémité d'un autre élément de canalisation ou, dans certains cas, faisant corps avec cet autre élément, notamment s'il est constitué par un tuyau rigide. Outre les organes d'étanchéité prévus sur l'un ou l'autre des embouts ou incorporés à eux, ces embouts rigides comportent des moyens complémentaires d'accrochage destinés à empêcher leur déboîtement axial sous l'effet de la pression pouvant régner à l'intérieur des canalisations.

Quel que soit le type particulier de ce genre de dispositif de raccordement, il est indispensable que deux zones d'étanchéité soient réalisées, d'une part, entre l'élément souple de canalisation et l'embout correspondant, d'autre part, entre les deux embouts complémentaires.

Pour obtenir l'étanchéité dans la première de ces deux zones, différents moyens sont envisageables.

Par exemple, on peut, si la matière s'y prête, surmouler ou coller l'élément souple de canalisation à l'intérieur ou à l'extérieur de son embout ainsi que cela est proposé par le brevet GB-A-2.178.503 ; dans ce cas, l'étanchéité et la fixation axiale des deux pièces l'une par rapport à l'autre sont simultanément assurées par le surmoulage ou par le collage. On notera cependant qu'un tel surmoulage, outre qu'il n'est pas toujours possible, est relativement onéreux. D'autre part il est souvent impossible de coller l'élément souple de canalisation sur son embout, en raison des risques de détérioration de la fixation axiale et de l'étanchéité par les fluides véhiculés, notamment par l'eau.

En général, on préférera, après avoir emmanché une portion de l'embout à l'intérieur de l'élément souple de canalisation, obtenir l'étanchéité au moyen d'un collier de serrage, d'une façon analogue à ce qui a été indiqué plus haut, mais on a déjà souligné les inconvénients de cette solution.

On signalera en outre l'existence des brevets FR-A-2.605.705, 2.606.118, 2.608.250, 2.614.084, ainsi que les brevets 2.628.819, 2.628.821, 2.630.522, 2.633.368 et 2.636.713 qui n'étaient pas encore publiés le 29 mai 1989, date de priorité de la présente invention. Ces documents proposent divers types de dispositifs démontables pour le raccordement étanche et rapide d'un tube rigide et d'un tuyau souple. Ces dispositifs connus visent, certes, à remédier à certains des inconvénients mis en évidence plus haut, mais il n'y parviennent qu'imparfaitement et surtout sont de fabrication relativement onéreuse. Leur mise en place est en outre peu sure.

On notera enfin l'existence du brevet CH-A-338.063 qui concerne le raccordement, sur une canalisation filetée, d'un conduit en matière plastique relativement rigide. Non seulement les dispositions proposées par ce brevet sont incompatibles avec l'utilisation d'un tuyau souple, mais on doit également noter qu'elles exigent en pratique une possibilité de rotation du conduit sur lui-même.

De même le brevet FR-A-909 769 et le brevet US-A-2.853.320 décrivent des dispositifs de raccordement dans lesquels une bague disposée à l'extérieur du tuyau souple présente au moins un épaulement interne.

Ce dernier est destiné, au cours de la rotation de la bague en vue de sa fixation par vissage, à entraîner le tuyau souple pour le faire glisser sur une portion conique allongée du tube rigide. Ces derniers dispositifs présentent divers inconvénients, notamment en raison des frottements importants prenant naissance au cours de l'emmanchement du tuyau souple sur le tube rigide et du fait de la nécessaire rotation de la bague par rapport au tuyau souple.

L'invention a donc pour objet un dispositif démontable de racordement étanche et rapide d'un tuyau souple emmanché sur un tube cylindrique, lisse et rigide dont le diamètre extérieur est supérieur au diamètre intérieur du tuyau souple.

Un tel dispostif comporte une bague rigide réalisée en métal ou en matière plastique semi-rigide, disposée à l'extérieur du tuyau souple et coaxialement à lui, ladite bague présentant, sur la majeure partie de sa longueur, une seule portion cylindrique interne dont le diamètre intérieur est sensiblement égal au diamètre extérieur du tuyau souple et une gorge annulaire définissant un épaulement interne destiné à constituer une butée axiale pour la surface extérieure du tuyau ; d'autre part, des moyens complémentaires d'accrochage axial, sont liés respectivement à la bague rigide et au tube.
La bague rigide est fixée par collage sur le tuyau souple préalablement à l'emmanchement du tuyau souple sur le tube rigide par un simple déplacement axial, dans une position telle que l'extrémité libre du tuyau souple est située à l'intérieur de la bague, en regard de sa gorge annulaire et au-delà de l'épaulement interne, cependant que le fond de la gorge annulaire a un diamètre supérieur d'au moins deux fois l'épaisseur du tuyau souple, au diamètre extérieur du tube, de sorte que, après assemblage axial des moyens complémentaires, la butée axiale assure à elle seule, grâce au pincement de la paroi du tuyau souple, l'appui de deux uniques surfaces complémentaires d'étanchéité du tube et de la surface intérieure du tuyau.

Tout en étant peu onéreux en raison du faible nombre de pièces qu'il exige, le dispositif selon l'invention est parfaitement compatible avec une automatisation complète de la mise en place du raccordement. En outre, comme on va le constater, le raccordement est obtenu sans exercer d'efforts radiaux importants sur le tuyau souple, ce qui évite les risques de fluage et les pertes d'étanchéité qui pourraient en résulter.

D'autre part, la séparation des "fonctions" : d'une part, étanchéité du raccordement par un unique contact entre deux surfaces complémentaires du tube et du tuyau et, d'autre part, résistance au déboîtement, permet d'envisager une grande variété de modes de réalisation. Cependant, on soulignera dès maintenant que l'élément dénommé "tuyau" est obligatoirement souple et élastique, par exemple en caoutchouc, pour des raisons qui apparaîtront clairement plus loin, et que l'élément dénommé "tube" est rigide ou semi-rigide et réalisé en tout matériau approprié, par exemple en métal ou en matière plastique.

Enfin grâce aux dispositions prévues par l'invention, la mise en place d'un raccordement ne nécessite que le rapprochement axial du tube et du tuyau souple, opération qui peut être automatisée. Lorsque la surface terminale du tube est en contact avec la surface intérieure du tuyau, avec un emmanchement, même limité, du tuyau souple sur le tube, la poursuite du mouvement axial peut provoquer immédiatement la coopération des moyens complémentaires d'accrochage.

L'invention sera mieux comprise et divers modes de réalisation, ainsi que leurs avantages spécifiques, apparaîtront au cours de la description, qui va suivre, de quelques exemples. A cet effet, on se référera aux dessins annexés dans lesquels :
- la figure 1 est une vue en coupe axiale d'un dispositif de raccordement selon l'invention, avant assemblage du dispositif
- la figure 2 est une vue suivant la flèche **F₁** de la figure 1, le tube étant supposé enlevé,
- la figure 3 est une vue en coupe axiale du dispositif représenté sur la figure 1, après raccordement du tube et du tuyau
- la figure 4 est une vue en coupe axiale, analogue à la figure 3, d'une variante de réalisation du dispositif selon l'invention.

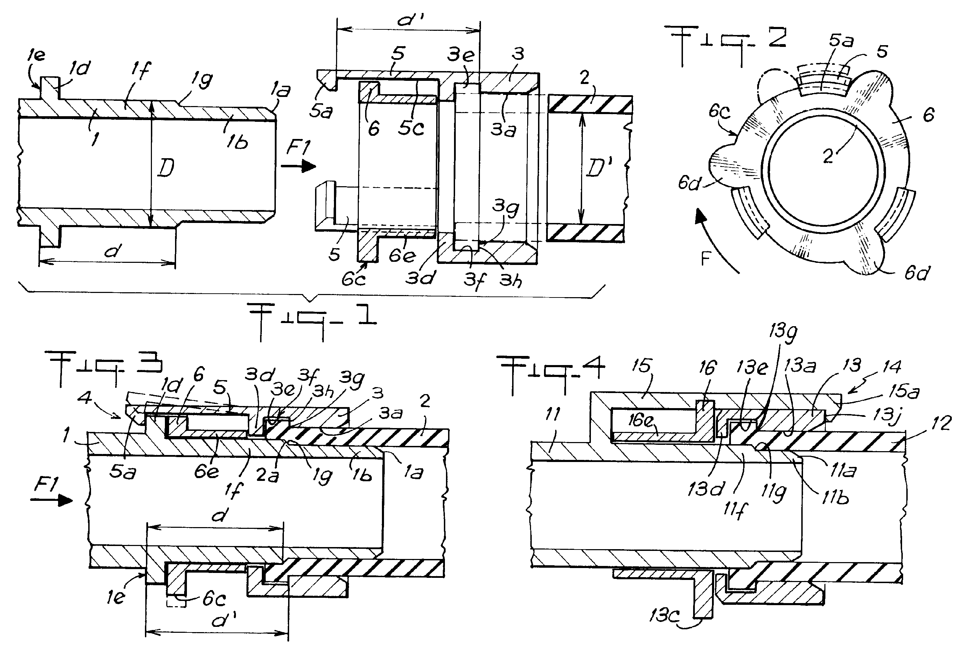

Si l'on se reporte tout d'abord aux figures 1, 2 et 3, on voit un dispositif de raccordement d'un tube rigide **1**, par exemple en métal ou en matière plastique, et d'un tuyau souple **2**, tel qu'une "durit" en caoutchouc. Il comporte essentiellement, d'une part, une bague **3**, par exemple en matière plastique moulée, disposée à l'extérieur du tuyau souple **2**, d'autre part, des moyens complémentaires d'accrochage axial, désignés par la référence générale **4**, liés respectivement à la bague **3** et au tube **1**.

Avant leur raccordement, le tube **1** et le tuyau **2** présentent des sections circulaires, de préférence voisines, le diamètre extérieur **D** du tube **1** étant cependant un peu supérieur au diamètre intérieur **D'** du tuyau **2**.

L'extrémité libre du tube **1** présente un chanfrein **1a** qui est suivi par une partie cylindrique **1b** dont le diamètre extérieur est sensiblement égal et, de préférence, au plus égal au diamètre intérieur D' du tuyau **2**. Cette partie cylindrique **1b** s'étend avantageusement sur une certaine longueur qui sera précisée plus loin. Au-delà de la partie cylindrique **1b** et en s'éloignant de l'extrémité libre, la surface extérieure du tube présente une deuxième partie cylindrique **1f** dont le diamètre extérieur **D** est, ainsi qu'on l'a déjà indiqué, un peu supérieur au diamètre intérieur **D'** du tuyau **2** et qui est raccordée à la partie cylindrique **1b** par un simple chanfrein **1g**. Ce dernier constitue donc une portion tronconique, située au voisinage de l'extrémité libre du tube **1**, à moins qu'elle ne soit l'extrémité même du tube dans le cas où la portion cylindrique **1b** n'existe pas. Il est important de noter que le plus grand diamètre de cette portion tronconique est égal au diamètre extérieur **D** du tube, tandis que son plus petit diamètre est lui même au plus égal au diamètre **D′** du tuyau.

Enfin, à une certaine distance de son extrémité libre **1a**, le tube **1** comporte une collerette radiale **1d**, faisant saillie vers l'extérieur, sa face **1e** opposée à l'extrémité **1a** constituant un épaulement dont l'utilité apparaîtra plus loin.

La bague **3** présente sur sa face interne une portion cylindrique **3a** dont le diamètre intérieur est sensiblement égal au diamètre extérieur du tuyau **2** sur lequel elle doit être montée. De préférence et comme on le voit sur la figure 3, la longueur de la partie cylindrique **1b** du tube est suffisante pour s'étendre, après montage, en regard d'au moins une fraction de la portion cylindrique **3a** de la bague.

En général, on préférera laisser lisse la surface intérieure **3a** de la bague **3**. Les avantages de cette disposition apparaîtront plus loin.

L'extrémité d'entrée (à droite sur la figure 1) de la bague **3** est de préférence chanfreinée, cependant que son extrémité opposée présente un épaulement annulaire **3d** dont le diamètre intérieur est voisin du diamètre extérieur **D** de la partie cylindrique **1f** du tube **1**.

Venues de moulage avec la bague **3**, des pattes **5**, radialement flexibles, s'étendent parallèlement à l'axe de la bague qui deviendra, après emmanchement, l'axe commun du tube **1** et du tuyau **2**. Dans l'exemple représenté, ces pattes sont au nombre de trois. L'extrémité libre de chacune d'elles est en forme de crochet **5a**, susceptible de s'encliqueter sur l'épaulement **1e** de la collerette **1d** du tube. A l'état libre, entre la zone de raccordement à la bague **3** et le crochet **5a**, les pattes **5** présentent une face interne **5c** cylindrique parallèle à l'axe de la bague.

Un anneau **6**, coaxial à la bague et pourvu d'un manchon **6e**, peut être disposé entre les pattes **5** avant la mise en place du raccordement, l'anneau et son manchon coulissant entre l'épaulement **3d** de la bague et les crochets **5a** des pattes. Le diamètre intérieur du manchon **6e** est sensiblement égal au diamètre extérieur **D** de la partie cylindrique **1f** du tube **1**, cependant que sa longueur est voisine de celle des pattes, diminuée de l'épaisseur de la collerette **1d**.

Entre deux pattes successives, la périphérie externe de l'anneau **6** présente avantageusement une forme de came **6c**, en contact avec la face interne **5c** des pattes, se terminant par une ailette de préhension **6d** (figure 2).

Enfin, entre l'épaulement **3d** et la portion cylindrique **3a** de la bague, il est prévu une gorge annulaire **3e** dont le fond cylindrique **3f** , provoque l'apparition d'une arête vive **3g** au raccordement de la portion cylindrique **3a** et du flanc **3h** de la gorge **3e.** L'intérêt de cette disposition apparaîtra plus loin.

Le raccordement du tube et du tuyau s'effectue de la façon suivante.

Il est tout d'abord nécessaire de monter la bague **3**, éventuellement munie de son anneau **6**, sur le tuyau **2** jusqu'à ce que ce dernier vienne en contact ou au voisinage de l'épaulement **3d** (position en trait ponctué sur la figure 1). Cette opération est facile en raison de la surface lisse **3a** de la bague et pourra être réalisée en usine, l'ensemble constitué par un tuyau et sa bague étant ensuite amené sur le lieu où l'on doit procéder au raccordement. Un collage sommaire de la bague **3** sur le tuyau **2** sera généralement suffisant pour empêcher leur déboîtement au cours de l' utilisation. On peut bien évidemment automatiser l'emmanchement du tuyau à l'intérieur de la bague et à cet égard, la présence d'un chanfrein à l'entrée de la bague facilite l'opération.

Pour le raccordement du tube **1** et du tuyau **2**, ce dernier, muni de la bague **3**, est présenté en regard de l'extrémité **1a** sans qu'il soit nécessaire d'assurer une orientation spécifique autour de son axe.

Un déplacement axial relatif du tuyau **2** vers le tube **1** permet à l'extrémité **1a** de pénétrer dans le tuyau. Le manchon **6e** facilite éventuellement le guidage et le centrage de l'extrémité du tube **1**, ce qui peut être important si l'on désire automatiser cette opération. Au début du mouvement, la paroi du tuyau n'oppose pratiquement aucune résistance à la pénétration de la partie cylindrique **1b**, mais lorsque la portion tronconique **1g** du tube rencontre l'extrémité libre du tuyau **2**, cette dernière se trouve repoussée radialement dans le logement constitué par la gorge **3e** (figure 3).

Le raccordement étanche du tuyau **2** emmanché sur le tube **1** est réalisé dès que les moyens complémentaires d'accrochage **1d** et **5a** entrent en coopération, comme on le voit sur la position représentée en trait plein à la figure 3.

En ce qui concerne tout d'abord l'étanchéité, elle est assurée par l'appui de la portion tronconique **1g** du tube sur la face interne de la paroi du tuyau **2** qui s'est déformée, dans la région **2a**, pour constituer une surface complémentaire de la portion **1g** du tube. La paroi du tuyau est alors pincée et comprimée entre la portion tronconique **1g** et la face **3h** de la gorge **3e** ou son arête **3g**, la face **3h** ou l'arête **3g** constituant ainsi une butée axiale. Cet effort de compression dépend, bien entendu, des dimensions mais peut rester relativement faible. En particulier on notera que l'extrémité libre du tuyau est simplement repoussée dans le logement constitué principalement par la gorge **3e** ; il convient même d'éviter que cette extrémité libre soit comprimée dans la gorge **3e**. A cet effet le diamètre du fond **3f** de la gorge sera avantageusement supérieur d'au moins deux fois l'épaisseur du tuyau souple, au plus grand diamètre **D** de la portion tronconique **1g** du tube. De plus il est nécessaire que la distance **d** entre la face **1e** de la collerette **1d** et le début du chanfrein **1g** soit au plus égale, et de préférence sensiblement inférieure à la distance **d'** entre la face d'appui des crochets **5a** et le début **3g** de la portion cylindrique **3a** de la bague.

En ce qui concerne, d'autre part, le déboîtement axial du tube **1** et de la bague, il est évidemment empêché par les moyens d'accrochage **4**. De plus, le tuyau souple **2** est fortement ancré dans la gorge **3e** de la bague, en raison de l'étranglement réalisé par les zones en regard, de l'arête **3g** et de la portion tronconique **1g**. L'efficacité de l'étranglement sera en général améliorée par le fait que la partie cylindrique **1b** du tube s'étend sur au moins une fraction de la portion cylindrique **3a** de la bague.

Si l'on désire procéder au démontage du raccordement, on fait tourner l'anneau **6** sur le tube **1** dans le sens de la flèche **F** de la figure **2** pour amener chaque ailette **6d** au voisinage de la patte **5** antérieure. Au cours de ce mouvement, les pattes **5** se soulèvent pour atteindre la position visible en trait ponctué sur les figures 2 et 3, dégageant ainsi les crochets **5a** de la collerette **1d**. Une traction sur le tuyau **2** dans le sens de la flèche **F₁** permet alors de le déboîter du tube **1**.

On soulignera quelques avantages de l'invention qui sont peut-être déjà apparus à l'homme de l'art. Le nombre de pièces nécessaires pour la réalisation du dispositif est réduit et elles ne nécessitent pas une fabrication très précise. Le coût du dispositif est donc peu élevé. D'autre part, l'effort axial d'emmanchement du tube **1** dans le tuyau **2** jusqu'au verrouillage, peut être lui-même faible, par exemple de l'ordre de 200 newtons pour un diamètre de tuyau voisin de 40 mm, si la pression de fluide véhiculé est inférieure à 10 bars.

Il est évident que les moyens complémentaires d'accrochage liés à la bague et au tube peuvent être de différents types. C'est ainsi par exemple qu'on a représenté sur la figure 4 une variante de réalisation dans laquelle les organes déjà décrits à propos de la réalisation selon les figures 1 à 3 portent les mêmes références augmentées de 10.

Dans cette variante, les pattes **15** sont liées au tube **11** et sont de préférence venues de moulage avec lui. Elles possèdent des crochets **15a** qui viennent s'encliqueter derrière la bague **13** à la fin de l'opération de raccordement, le bord **13j** de la bague jouant un rôle analogue à celui de la face **1e** de la collerette **1d**.

L'anneau de déverrouillage **16** et son manchon **16e** ont été représentés schématiquement; ils seront de préférence du type déjà décrit à propos de la réalisation précédente. Il en est de même de la gorge **13e** et de l'épaulement **13d** : sur le tube **11**, il leur correspond une portion tronconique **11g** dont le diamètre extérieur repousse la paroi du tuyau **12** dans la gorge **13e** tout en la pinçant contre l'arête **13g**.

On a déjà indiqué divers avantages de l'invention; on notera encore que, d'une façon générale, les dimensions des divers organes ainsi que les tolérances de montage et d'assemblage doivent être déterminées dans chaque cas pour assurer une compression et une déformation juste suffisantes de l'extrémité libre du tuyau en vue d'obtenir sur ce dernier une surface propre à conférer au raccordement l'étanchéité recherchée. A cet égard, on indiquera que les essais déjà réalisés ont montré que l'invention peut facilement s'adapter aux exigences de plus en plus sévères de la technique.

Enfin, bien que dans les exemples décrits les moyens d'accrochage axial soient tous du même type, on pourra utiliser des organes complémentaires d'un autre genre, par exemple ceux communément appelés "montage à baïonnette". Ces derniers, en particulier, s'accommodent parfaitement d'une mise en place entièrement automatisée. En outre ils permettent en général de ne prévoir qu'une seule pièce pour assurer, aussi bien le raccordement du tube et du tuyau que leur démontage.

## Revendications

1. Dispositif démontable de raccordement étanche et rapide d'un tuyau souple ***(2)*** emmanché sur un tube ***(1)***, cylindrique, lisse et rigide, dont le diamètre extérieur est supérieur au diamètre intérieur du tuyau souple, comportant:
- d'une part, une bague rigide ***(3)*** réalisée en métal ou en matière plastique semi-rigide, disposée à l'extérieur du tuyau souple ***(2)*** et coaxialement à lui, ladite bague présentant, sur la majeure partie de sa longueur, une seule portion cylindrique interne ***(3**a**)*** dont le diamètre intérieur est sensiblement égal au diamètre extérieur du tuyau souple ***(2)*** et une gorge annulaire ***(3**e**)*** définissant un épaulement interne ***(3**h**)*** destiné à constituer une butée axiale pour la surface extérieure du tuyau,
- d'autre part, des moyens complémentaires d'accrochage axial, liés respectivement à la bague rigide ***(3)*** et au tube ***(1)***,
la bague rigide ***(3)*** étant fixée par collage sur le tuyau souple préalablement à l'emmanchement du tuyau souple sur le tube rigide par un simple déplacement axial, dans une position telle que l'extrémité libre du tuyau souple est située à l'intérieur de la bague, en regard de sa gorge annulaire ***(3**e**)*** et au-delà de l'épaulement interne ***(3**h**)***, cependant que le fond ***(3**f**)*** de la gorge annulaire ***(3**e**)*** a un diamètre supérieur d'au moins deux fois l'épaisseur du tuyau souple, au diamètre extérieur du tube *(1)*, de sorte que, après assemblage axial des moyens complémentaires, la butée axiale***(3**g**)*** assure à elle seule, grâce au pincement de la paroi du tuyau souple, l'appui de deux uniques surfaces complémentaires d'étanchéité ***(1**g**,2**a**)*** du tube et de la surface intérieure du tuyau.

2. Dispositif selon la revendication 1, caractérisé en ce que l'extrémité libre du tube **(1)** comporte, d'une part, une partie cylindrique **(1b)** dont le diamètre extérieur est sensiblement égal mais au plus égal au diamètre intérieur du tuyau souple **(2)** et dont la longueur est suffisante pour qu'après montage du raccordement cette partie cylindrique s'étende sur au moins une fraction de la portion cylindrique **(3a)** de la bague, d'autre part, une portion tronconique **(1g)**, telle qu'un simple chanfrein, raccordant la surface extérieure de la partie cylindrique **(1b)** à la surface extérieure du tube **(1)**.

3. Dispositif selon la revendication 1, caractérisé en ce que le raccordement de l'épaulement interne **(3h)** et de la portion cylindrique **(3a)** de la bague comporte une arête vive **(3g)**.

4. Dispositif selon l'une quelconque des revendications 1 à 3, caractérisé en ce que la bague **(3)** présente au moins une patte **(5)** sensiblement parallèle à son axe, ladite patte étant pourvue de moyens d'accrochage et/ou d'encliquetage **(5a)** à son extrémité libre.

5. Dispositif selon la revendication 4, caractérisé en ce que le tube **(1)** est pourvu d'une collerette radiale **(1d)** constituant le moyen d'accrochage complémentaire de ceux prévus sur la bague **(3)**.

6. Dispositif selon l'une quelconque des revendications 1 à 3, caractérisé en ce que le tube **(11)** présente au moins une patte **(15)** sensiblement parallèle à son axe, ladite patte étant pourvue de moyens d'accrochage et/ou d'encliquetage **(15a)** à son extrémité libre.

7. Dispositif selon la revendication 6, caractérisé en ce que la bague **(13)** présente un bord **(13j)** constituant le moyen d'accrochage complémentaire de ceux prévus sur le tube **(11)**.

## Patentansprüche

1. Abnehmbare Vorrichtung zur dichten und raschen Verbindung eines Schlauchs (2), der auf einem zylindrischen, glatten und starren Rohr (1) aufgesteckt ist, dessen Außendurchmesser größer als der Innendurchmesser des Schlauchs ist, mit:
- einerseits einem starren Ring (3) aus Metall oder einem halbfesten Platikmaterial, der außerhalb des Schlauchs (2) und koaxial zu diesem angeordnet ist, welcher Ring über den Großteil seiner Länge einen einzigen inneren zylindrischen Abschnitt (3a), dessen Innendurchmesser im wesentlichen gleich dem Außendurchmesser des Schlauchs (2) ist, und eine ringförmige Nut (3e), die eine Innenschulter (3h) zur Bildung eines axialen Anschlags für die Außenfläche des Schlauchs (1) definiert, aufweist,
- anderseits komplementären Axialverhakungsmitteln, die mit dem starren Ring (3) bzw. mit dem Rohr (1) verbunden sind,
wobei der starre Ring (3) vor Aufstecken des Schlauchs auf das starre Rohr durch einfache axiale Verschiebung mittels Kleben auf dem Schlauch fixiert wird, u.zw. in einer derartigen Position, daß sich das freie Ende des Schlauchs innerhalb des Rings gegenüber der ringförmigen Nut (3e) und jenseits der Innenschulter (3h) befindet, wobei der Grund (3f) der ringförmigen Nut (3e) einen Durchmesser hat, der um mindestens zweimal die Dicke des Schlauchs größer als der Außendurchmesser des Rohres (1) ist, sodaß der axiale Anschlag (3g) für sich allein nach dem axialen Zusammensetzen der komplementären Mittel durch Quetschen der Wand des Schlauchs die Anlage zweier komplementärer Einzeldichtflächen (1g, 2a) des Rohres und der Innenfläche des Schlauchs gewährleistet.

2. Vorrichtung nach Anspruch 1, dadurch gekennzeichnet, daß das freie Ende des Rohres (1) einerseits einen zylindrischen Teil (1b), dessen Außendurchmesser im wesentlichen gleich, aber höchstens gleich, dem Innendurchmesser des Schlauchs (2) ist und dessen Länge ausreicht, damit sich dieser zylindrische Teil nach Herstellen der Verbindung über zumindest einen Teil des zylindrischen Abschnitts (3a) des Ringes erstreckt, und andererseits einen kegelstumpfförmigen Abschnitt (1g), wie eine einfache Schrägung, aufweist, die die Außenfläche des zylindrischen Teils (1b) mit der Außenfläche des Rohres (1) verbindet.

3. Vorrichtung nach Anspruch 1, dadurch gekennzeichnet, daß die Verbindung der Innenschulter (3h) und des zylindrischen Abschnitts (3a) des Ringes eine scharfe Kante (3g) aufweist.

4. Vorrichtung nach einem der Ansprüche 1 bis 3, dadurch gekennzeichnet, daß der Ring (3) mindestens eine zu seiner Achse im wesentlichen parallele Pratze (5) aufweist, welche Pratze an ihrem freien Ende mit Verhakungs- und/oder Einrastmitteln (5a) versehen ist.

5. Vorrichtung nach Anspruch 4, dadurch gekennzeichnet, daß das Rohr (1) mit einem radialen Bund (1d) versehen ist, der das komplementäre Verhakungsmittel zu den auf dem Ring (3) vorgesehenen bildet.

6. Vorrichtung nach einem der Ansprüche 1 bis 3, dadurch gekennzeichnet, daß das Rohr (11) mindestens eine zu seiner Achse im wesentlichen parallele Pratze (15) aufweist, welche Pratze an ihrem freien Ende mit Verhakungs- und/oder Einrastmitteln (15a) versehen ist.

7. Vorrichtung nach Anspruch 6, dadurch gekennzeichnet, daß der Ring (13) einen Rand (13j) aufweist, der das komplementäre Verhakungsmittel zu den auf dem Rohr vorgesehenenen (11) bildet.

## Claims

1. Dismountable device for making an instant sealed connection between a flexible hose *(2)* engaged over a smooth and rigid cylindrical tube *(1)*, the outer diameter of which is greater than the inner diameter of the hose, said device comprising:
- on the one hand, a rigid ring *(3)* made of metal or of a semi-rigid plastic material, disposed outside the hose *(2)* and co-axially thereto, said ring having, along most of its length, a single internal cylindrical portion *(3**a**)* whose inner diameter is substantially equal to the outer diameter of the hose *(2)* and an annular groove *(3**e**)* defining an inside shoulder *(3**h**)* adapted to constitute an axial abutment for the extemal surface of the hose,
- on the other hand, complementary axial fastening means connected respectively to the rigid ring *(3)* and to the tube *(1)*,
the rigid ring *(3)* being adhesively fixed on the hose before the latter is engaged over the rigid tube by a simple axial displacement, in a position such that the free end of the hose is located inside the ring, in facing relationship to its annular groove *(3**e**)* and beyond the inside shoulder *(3**h**)*. while the bottom *(3**f**)* of the annular groove *(3**e**)* exceeds the outer diameter of the tube *(1)* by at least twice the thickness of the hose, such that after axial assembly of the complementary means, the axial abutment *(3**g**)* alone ensures, due to the gripping of the wall of the hose, the bearing together of two single complementary sealing surfaces *(1**g**, 2**a**)* of the tube and of the internal surface of the hose.

2. Device according to claim 1, characterized in that the free end of the tube *(1)* comprises, on the one hand, a cylindrical portion *(1**b**)* whose outer diameter is substantially equal to but at the most equal to the inner diameter of the hose *(2)* and whose length is sufficient to ensure that, after a connection has been made, said cylindrical portion extends over at least a fraction of the cylindrical portion *(3**a**)* of the ring, on the other hand, a frustoconical portion *(1**g**)*, such as a simple chamfer, connecting the external surface of the cylindrical portion *(1**b**)* to the external surface of the tube *(1)*.

3. Device according to claim 1, characterized in that the connection between the inner shoulder *(3**h**)* and the cylindrical portion *(3**a**)* of the ring has a sharp edge *(3**g**)*.

4. Device according to any one of claims 1 to 3, characterized in that the ring *(3)* has at least one tab *(5)* which is substantially parallel to the axis thereof, the free end of said tab being provided with fastening and/or snap-fastening means *(5**a**)*.

5. Device according to claim 4, characterized in that the tube *(1)* includes a radial flange *(1**d**)* which constitutes the fastening means which is complementary to those provided on the ring *(3)*.

6. Device according to any one of claims 1 to 3, characterized in that the tube *(11)* has at least one tab *(15)* which is substantially parallel to the axis thereof, the free end of said tab being provided with fastening and/or snap-fastening means *(15**a**)*.

7. Device according to claim 6, characterized in that the ring *(13)* includes an edge *(13**j**)* which constitutes the fastening means which is complementary to those provided on the tube *(11)*.
